# EUROPEAN PATENT APPLICATION

(11) **EP 4 826 354 A1**
(43) Date of publication of application: **21.10.2026**
(21) Application number: 24903344.0
(22) Date of filing: 22.10.2024
(51) Int. Cl.: G01N 15/02, G01N 15/1434

(54) **INFORMATION PROCESSING DEVICE, MICROPARTICLE ANALYZER, METHOD OF EXTRACTING PARTICLE INFORMATION, METHOD OF DISTINGUISHING PARTICLES, ANALYSIS METHOD, INFORMATION PROCESSING SYSTEM, AND PROGRAM FOR EXTRACTING PARTICLE INFORMATION**

(30) Priority: 14.12.2023 JP 2023211094
(71) Applicant: Sony Group Corporation, Tokyo 108-0075 (JP)
(72) Inventor: TAHARA, Katsutoshi, Tokyo 108-0075 (JP)
(74) Representative: D Young & Co LLP
(86) International application number: PCT/JP2024/037557
(87) International publication number: WO 2025/126681

(57) **Abstract**

A main object of the present technology is to provide a technique for identifying a suitable range of particle information about particles from a waveform of signal intensity with respect to the measurement time measured treating, as a measurement target, a liquid in which the particles are present and fetching the information.

As a result of intensive research, the present inventors have found that, by setting a center time in addition to a prefetch time, a postfetch time, and a threshold, it is possible to identify a suitable range of particle information about one particle from a waveform of signal intensity with respect to the measurement time measured treating, as a measurement target, a liquid in which particles are present and to reduce the effect of the sizes, shapes, and quality of particles that are present in the measurement-target liquid.

## Description

### Technical Field

The present technology relates to an information processing apparatus, a microparticle analyzing apparatus, a particle information fetch method, a particle distinguishing method, an analysis method, an information processing system, and a particle information fetch program. More specifically, the present technology relates to an information processing apparatus, a microparticle analyzing apparatus, a particle information fetch method, a particle distinguishing method, an analysis method, an information processing system, and a particle information fetch program related to particle information, in which particle information about particles is fetched from a waveform of signal intensity with respect to the measurement time measured treating, as a measurement target, a liquid in which the particles are present.

### Background Art

Conventionally, there has been a known method of fetching particle information about particles from a waveform of signal intensity measured treating, as a measurement target, a liquid in which the particles are present.

For example, the following Patent Literature 1 discloses a method of performing multi-color measurement by performing correction of fluorescence intensity on a waveform of signal intensity having a plurality of peaks measured in an apparatus (e.g., a flow cytometer) or the like that measures characteristics of microparticles.

### Citation List

### Patent Literature

Patent Literature 1: JP-2011-232259-A

### Disclosure of Invention

### Technical Problem

A main object of the present technology is to provide a technique for identifying a suitable range of particle information about particles from a waveform of signal intensity with respect to the measurement time measured treating, as a measurement target, a liquid in which the particles are present and fetching the information.

### Solution to Problem

As a result of intensive research, the present inventors have found that, by setting a center time in addition to a prefetch time, a postfetch time, and a threshold, it is possible to identify a suitable range of particle information about one particle from a waveform of signal intensity with respect to the measurement time measured treating, as a measurement target, a liquid in which particles are present and to reduce the effect of the sizes, shapes, and quality of particles that are present in the measurement-target liquid.

That is, the present technology provides an information processing apparatus including a receiving section that acquires at least one of information about a sample including microparticles in a microparticle analyzing apparatus or information about a measurement condition of the sample; a fetching section that fetches particle information about one particle from a waveform of signal intensity with respect to measurement time from a microparticle included in the sample, the waveform being measured by the microparticle analyzing apparatus; and an input section to which mode selection information for selecting a mode of the fetching section is input, in which the fetching section includes a mode selecting section that selects a normal fetch mode and at least one center-time-fixed fetch mode, and the center-time-fixed fetch mode is selectable on the basis of the mode selection information input to the input section.

In the center-time-fixed fetch mode, using a preset prefetch time, a preset postfetch time, a preset threshold, and a preset center time, a point at which the signal intensity exceeds the threshold may be identified as a fetch start reference point, whichever ends earlier of a center time end point and a threshold cross-down point is identified as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point, and a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.

The fetching section may include a center time determining section that adjusts to set the center time such that a ratio of a certain number of the pieces of particle information to a total number of the pieces of particle information fetched becomes equal to or lower than 10%, the certain number being a number of the pieces of particle information fetched by identifying the center time end point as the fetch end reference point.

In the normal fetch mode, a point at which the signal intensity exceeds the threshold may be identified as a fetch start reference point, a threshold cross-down point at which the signal intensity becomes equal to or lower than the threshold may be identified as a fetch end reference point, and a waveform from a fetch start point to a fetch end point may be fetched from the waveform of the signal intensity with respect to the measurement time as the particle information about one particle, the fetch start point being the prefetch time before the fetch start reference point, the fetch end point being the postfetch time after the fetch end reference point.

In the present technology, the input of the mode selection information may be performed by one of manual input, reading of the measurement target, and reading of the measurement information.

In a case in which the fetching section included in the information processing apparatus according to the present technology includes the mode selecting section that selects the center-time-fixed fetch mode and the normal fetch mode, the fetching section may further include a calculator that calculates a particle size of a particle from the particle information, and, when an average particle size of the particles is equal to or greater than 10 µm, the mode selecting section may select the center-time-fixed fetch mode.

The information processing apparatus according to the present technology may further include an analyzing section that analyzes a waveform of the fetched particle information.

In addition, the present technology provides a microparticle analyzing apparatus including the information processing apparatus according to the present technology.

Next, the present technology provides a particle information fetch method of fetching particle information about particles from a waveform of signal intensity with respect to measurement time, the waveform being measured treating, as a measurement target, a liquid in which the particles are present, the particle information fetch method including setting a prefetch time, a postfetch time, a threshold, and a center time; identifying, in the waveform and as a fetch start reference point, a point at which the signal intensity exceeds the threshold; identifying whichever ends earlier of a center time end point and a threshold cross-down point as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point; and fetching, from the waveform of the signal intensity with respect to the measurement time, a waveform from a fetch start point to a fetch end point as particle information about one particle, the fetch start point being the prefetch time before the fetch start reference point, the fetch end point being the postfetch time after the fetch end reference point.

The setting of the center time may be performed by adjusting the center time such that a ratio of a certain number of the pieces of particle information to a total number of the pieces of particle information fetched becomes equal to or lower than 10%, the certain number being a number of the pieces of particle information fetched by identifying the center time end point as the fetch end reference point.

A particle size of the particles related to particle information fetched by the present technology may be equal to or greater than 10 µm, and the particles may include supports such as carriers. In addition, a number of the particles in 100 µl of the measurement-target liquid may be equal to or smaller than 10,000,000.

In addition, the present technology provides a particle distinguishing method of distinguishing between particles on the basis of a shape of a waveform of particle information fetched by executing the particle information fetch method according to the present technology.

Furthermore, the present technology provides a method of analyzing the measurement target, the method including analyzing particle information fetched by executing the particle information fetch method according to the present technology.

Next, the present technology provides an information processing system including a measurement system that measures a waveform of signal intensity with respect to measurement time treating, as a measurement target, a liquid in which microparticles are present; a reception system that acquires at least one of information about the measurement target from the measurement system or information about a measurement condition of the measurement target; a fetching system that fetches particle information about one particle from the waveform of the signal intensity with respect to the measurement time from a microparticle included in the sample, the waveform being measured by a microparticle analyzing apparatus; and an input system to which mode selection information for selecting a mode of the fetching system is input, in which the fetching system includes a mode selecting section that selects a normal fetch mode and at least one center-time-fixed fetch mode, and the center-time-fixed fetch mode is selectable on the basis of the mode selection information input to the input system.

The information processing system is provided in which, in the center-time-fixed fetch mode, using a preset prefetch time, a preset postfetch time, a preset threshold, and a preset center time, a point at which the signal intensity exceeds the threshold is identified as a fetch start reference point, whichever ends earlier of a center time end point and a threshold cross-down point is identified as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point, and a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.

In addition, the present technology provides a particle information fetch program used to fetch particle information about particles from a waveform of signal intensity with respect to measurement time, the waveform being measured treating, as a measurement target, a liquid in which the particles are present, the particle information fetch program causing a process to be performed, the process including setting a prefetch time, a postfetch time, a threshold, and a center time; identifying, in the waveform and as a fetch start reference point, a point at which the signal intensity exceeds the threshold; identifying whichever ends earlier of a center time end point and a threshold cross-down point as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point; and fetching, from the waveform of the signal intensity with respect to the measurement time, a waveform from a fetch start point to a fetch end point as particle information about one particle, the fetch start point being the prefetch time before the fetch start reference point, the fetch end point being the postfetch time after the fetch end reference point.

### Brief Description of Drawings

[Fig. 1] Fig. 1 illustrates an example of a flowchart of a particle information fetch method (center-time-fixed fetch mode) according to the present technology.
[Fig. 2] Fig. 2 illustrates an example of a flowchart of a normal particle information fetch method (normal fetch mode).
[Fig. 3] Fig. 3 illustrates an image view of a fetch of particle information about a particle having one peak as particle information in the normal fetch mode.
[Fig. 4] Fig. 4 illustrates an image view of a fetch of particle information about a particle having a plurality of peaks as particle information in the normal fetch mode.
[Fig. 5] Fig. 5 illustrates an image view of a fetch of particle information about a particle having a plurality of peaks as particle information in the center-time-fixed fetch mode.
[Fig. 6] Fig. 6 illustrates an image view of a case in which the center time is set shorter when particle information about a particle having a plurality of peaks is fetched as particle information in the center-time-fixed fetch mode.
[Fig. 7] Fig. 7 illustrates an image view of a case in which the center time is set even shorter when particle information about a particle having a plurality of peaks is fetched as particle information in the center-time-fixed fetch mode.
[Fig. 8] Fig. 8 illustrates an image view of a fetch of particle information about a particle having one peak as particle information in the center-time-fixed fetch mode.
[Fig. 9] Fig. 9 illustrates an image view of a fetch of particle information about another particle having a plurality of peaks as particle information in the center-time-fixed fetch mode.
[Fig. 10] Fig. 10 illustrates an image view of a fetch of particle information about another particle having a plurality of peaks as particle information in the center-time-fixed fetch mode.
[Fig. 11] Fig. 11 illustrates an image view of a case in which the center time is set shorter when particle information about a particle having a plurality of peaks is fetched as particle information in the center-time-fixed fetch mode. [Fig. 12] Fig. 12 illustrates an image view of a fetch of particle information about a particle having a plurality of peaks as particle information in a modification example of the center-time-fixed fetch mode.
[Fig. 13] Fig. 13 illustrates an example of a flowchart to be followed when the center time is set.
[Fig. 14] Fig. 14 illustrates an image view illustrating the effect on the number of events when the center time is set shorter.
[Fig. 15] Fig. 15 illustrates an image view illustrating the effect on the number of events when the center time is set sufficiently longer.
[Fig. 16] Fig. 16 illustrates an example of waveforms of signal intensity obtained when particles including only supports is measured.
[Fig. 17] Fig. 17 illustrates an example of waveforms of signal intensity obtained when particles including only cells are measured.
[Fig. 18] Fig. 18 illustrates an example of waveforms of signal intensity obtained when particles including supports carrying cells are measured.
[Fig. 19] Fig. 19 illustrates an example of waveforms of signal intensity obtained when other particles are measured.
[Fig. 20] Fig. 20 schematically illustrates an example of the overall configuration of an information processing apparatus according to the present technology.
[Fig. 21] Fig. 21 is a diagram schematically showing the overall configuration of a biological sample analyzer.

### Mode(s) for Carrying Out the Invention

Hereinbelow, a suitable embodiment of the present technology is explained. It should be noted that the embodiment illustrated below illustrates an example of representative embodiments of the present technology, and the present technology is not limited only to the following suitable embodiment but can be changed in any manner within the scope of the present technology.

### [Particle Information Fetch Method]

When a particle that is present in a liquid is measured using a flow cell or the like having a flow channel for measurement, for example, particle information about the particle is fetched from a graph of a measurement result waveform of the forward-scattering (Forward Scatter/FSC) signal intensity of light emitted by the particle with respect to the measurement time.

Here, a waveform of signal intensity of forward-scattered light from a measurement-target particle differs in signal intensity level, shape, and pattern in some cases depending on the size or type of the particle, and there can also be a case in which a waveform related to one piece of particle information is identified as a waveform related to two pieces of particle information. Incorrectly identifying the number of pieces of identified particle information and a waveform of signal intensity may create the possibility of errors in subsequent analysis or in particle distinguishing results.

In a particle information fetch method according to the present technology, in addition to a prefetch time (PreFetch), a postfetch time (PostFetch), and a threshold (Threshold), a center time (SeekSpan) is set in fetching particle information about particles from a waveform of signal intensity with respect to the measurement time measured treating, as a measurement target, a liquid in which the particles are present. By setting the center time, the present technology enables a suitable fetch of particle information about one particle from the waveform. Hereinbelow, a more specific explanation is given with reference to the drawings.

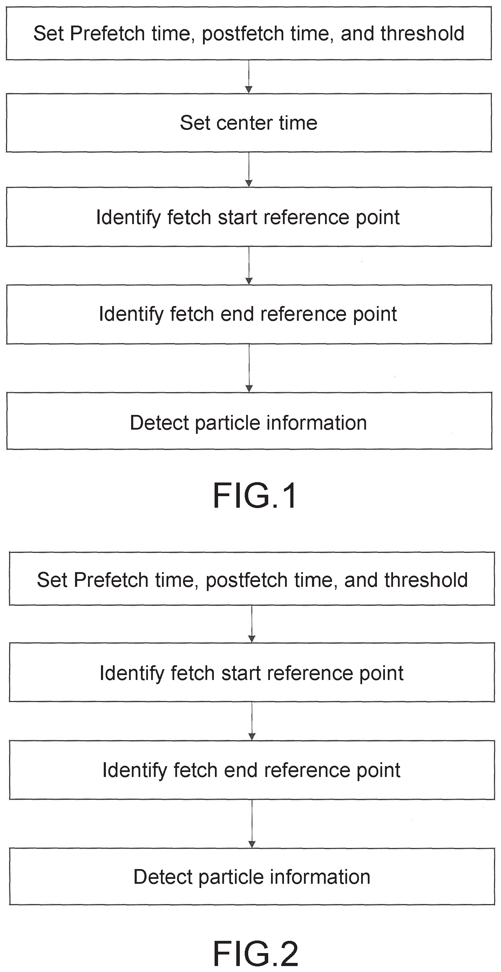

Fig. 1 is an example of a flowchart of a particle information fetch method according to the present technology, and Fig. 2 is an example of a flowchart of a normal particle information fetch method. As illustrated in the figures, the particle information fetch method according to the present technology is different from the normal particle information fetch method in that a center time is set in addition to a prefetch time, a postfetch time, and a threshold in the particle information fetch method according to the present technology.

Note that, whereas the center time is set after the prefetch time, the postfetch time, and the threshold are set in the procedure illustrated in Fig. 1 in order to make it easier to understand the difference from the normal particle information fetch method illustrated in Fig. 2, the center time may be set before the prefetch time, the postfetch time, and the threshold are set. Furthermore, the order in which the prefetch time, the postfetch time, the threshold, and the center time are set is not particularly limited, and these items can be set in any order.

For example, the prefetch time and the postfetch time can be set to any measurement-time values which are equal to or greater than zero on the basis of the waveform pattern of changes in signal intensity detected on the vertical axis with respect to the measurement time on the target horizontal axis.

For example, the threshold can be set to any signal-intensity value which is equal to or greater than zero with reference to the shape of the waveform of changes in signal intensity detected on the vertical axis with respect to the measurement time on the target horizontal axis.

For example, the center time can be set to any measurement-time value on the basis of the waveform pattern of changes in signal intensity detected on the vertical axis with respect to the measurement time on the target horizontal axis. In addition, the center time may be adjusted by a suitable center-time setting method described later.

In a fetch of a waveform related to one piece of particle information from a graph of a waveform of signal intensity with respect to the measurement time measured treating, as a measurement target, a liquid in which particles are present, a fetch start reference point to serve as a reference point of the start portion of a waveform related to the particle information and a fetch end reference point to serve as a reference point of the end portion of the waveform related to the particle information are identified, and a waveform from a fetch start point which is the prefetch time before the fetch start reference point to a fetch end point which is the postfetch time after the fetch end reference point is fetched as particle information about one particle.

Note that a set of information fetched as pieces of particle information about one particle is treated as an event, and the measurement time from the fetch start point to the fetch end point is treated as the measurement duration of one event and is called Width.

The identification of the fetch start reference point is performed by the same procedure in the particle information fetch method according to the present technology illustrated in the example in Fig. 1 and in the normal particle information fetch method illustrated in the example in Fig. 2. Specifically, from the graph of a waveform of signal intensity with respect to the measurement time, a point (Cross Up) at which the signal intensity exceeds the set threshold is identified as the fetch start reference point.

On the other hand, the identification of the fetch end reference point is performed by different procedures in the particle information fetch method according to the present technology and in the normal particle information fetch method.

In the normal particle information fetch method illustrated in the example in Fig. 2, as described before, a threshold cross-down point (Cross Down) which appears after the identified fetch start reference point and at which the signal intensity described before becomes equal to or lower than the set threshold is identified as the fetch end reference point. In contrast to this, in the particle information fetch method according to the present technology illustrated in the example in Fig. 1, as described before, the fetch end reference point is identified with the identified fetch start reference point serving as a start point. For example, whichever ends earlier of a center time end point at which the set center time ends and the threshold cross-down point that last appears within the center time whose start point is the fetch start reference point is identified as the fetch end reference point.

Hereinbelow, using examples of graphs of a waveform of signal intensity with respect to the measurement time included in measurement information measured treating, as a measurement target, a liquid in which particles are present, differences between the particle information fetch method according to the present technology and the normal particle information fetch method are explained more specifically.

Note that measurement information from which particle information is fetched by the present technology may be measurement information that is measured by a measuring apparatus, such as a microparticle analyzing apparatus, capable of measuring, as a measurement target, a liquid in which particles are present and is used after being obtained through transfer or the like as is without being stored in a storage medium or the like, and also past measurement information stored in a storage medium or the like can be used.

### <Normal Particle Information Fetch Method>

In order to clarify features of the particle information fetch method according to the present technology, first, a procedure in which normal particle information is fetched from a waveform of signal intensity with respect to the measurement time measured treating, as a measurement target, a liquid in which particles are present and problems thereof are explained.

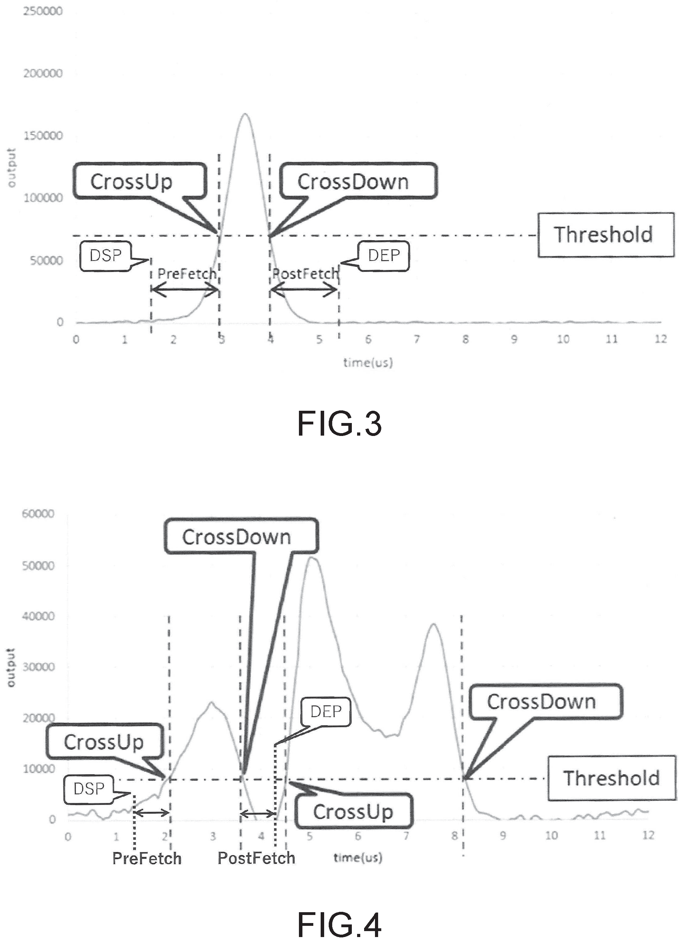

Fig. 3 illustrates an image view of a fetch of particle information about a particle having one peak as particle information from a graph of a waveform of signal intensity with respect to the measurement time measured treating, as a measurement target, a liquid in which the particle is present, by the normal particle information fetch method. The waveform illustrated in Fig. 3 represents changes in the signal intensity detected on the vertical axis with respect to the measurement time on the horizontal axis. Note that the particle in the case illustrated in Fig. 3 was obtained using Auto Setup Beads (sold by Sony Biotechnology). In addition, the signal intensity is signal intensity obtained by measuring forward-scattered (FSC/Forward Scatter) light when light is emitted onto a measurement target. Note that the signal intensity used in the present technology is not limited to the forward-scattering signal intensity, but the signal intensity of data used in the present specification is the forward-scattering signal intensity unless stated otherwise.

In the normal particle information fetch method, the prefetch time, the postfetch time, and the threshold are set in accordance with the procedure illustrated in Fig. 2. In the graph of the waveform, a point (Cross Up in Fig. 3) at which the graph representing the signal intensity exceeds the threshold (the line Threshold in Fig. 3) becomes the fetch start reference point. Then, a point (threshold cross-down point/Cross Down in Fig. 3) at which the graph representing the signal intensity becomes equal to or lower than the threshold becomes the fetch end reference point.

Then, using the fetch start reference point and the fetch end reference point identified as described above, the interval from the fetch start point (DSP/Data Start Point in Fig. 3) which is the prefetch time (PreFetch in Fig. 3) before the fetch start reference point to the fetch end point (DEP/Data End Point in Fig. 3) which is the postfetch time (PostFetch in Fig. 3) after the fetch end reference point is treated as Width of one event, and the waveform within this interval is fetched as particle information about one particle.

Next, a case illustrated in Fig. 4 in which particle information about a particle having a plurality of peaks is fetched as particle information from a graph of a waveform of signal intensity with respect to the measurement time is examined. Similarly to the case illustrated in Fig. 3, the waveform illustrated in Fig. 4 represents changes in the signal intensity detected on the vertical axis with respect to the measurement time on the horizontal axis. Note that a waveform that has been confirmed to exhibit changes in the signal intensity detected for one particle and have a plurality of peaks as particle information about one particle is used as the waveform illustrated in Fig. 4. Note that, as a particle in the case illustrated in Fig. 4, a non-spherical bead is used as an example of a particle having a complex surface shape.

In the waveform illustrated in Fig. 4, there are two points (Cross Up in Fig. 4) at which the graph representing the signal intensity exceeds the threshold (the line Threshold in Fig. 4) and two points (Cross Down in Fig. 4) at which the graph representing the signal intensity becomes equal to or lower than the threshold.

In accordance with the procedure of the normal particle information fetch method, Cross Up that first appears becomes the fetch start reference point, and Cross Down that subsequently appears first becomes the fetch end reference point. As a result, the interval from the fetch start point (DSP in Fig. 4) which is the prefetch time (PreFetch in Fig. 4) before the fetch start reference point to the fetch end point (DEP in Fig. 4) which is the postfetch time (PostFetch in Fig. 4) after the fetch end reference point is treated as Width of one event, and the waveform within this interval is fetched as particle information about one particle. That is, in the normal particle information fetch method, there is a possibility that, when particle information about one particle is detected as having a plurality of peaks, the particle information is fetched as particle information about two particles. Thereby, the number of fetched events may change, and this may create the possibility of incorrect analysis or distinguishing due to a waveform of signal intensity with respect to the measurement time.

### <Particle Information Fetch Method According to Present Technology>

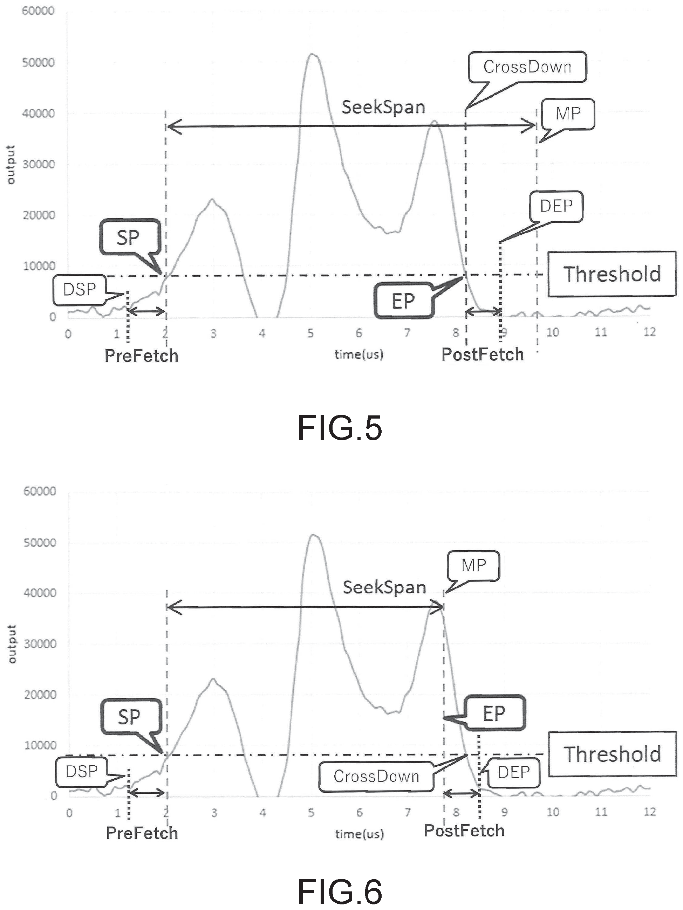

In view of the matters described above, in the present technology, particle information about one particle is suitably fetched by setting the center time and identifying the fetch end reference point with reference to the center time. A more specific explanation is given using Fig. 5.

The waveform illustrated in Fig. 5 is the same as the waveform illustrated in Fig. 4 and represents changes in the signal intensity detected for one particle with respect to the measurement time.

In the particle information fetch method according to the present technology, in addition to the prefetch time, the postfetch time, and the threshold, the center time is set in accordance with the procedure illustrated in Fig. 1. As described before, the order in which the prefetch time, the postfetch time, the threshold, and the center time are set is not limited, and these items can be set in any order.

Next, in accordance with the procedure illustrated in Fig. 1, in the graph of the waveform in Fig. 5, a point (SP in Fig. 5) at which the graph representing the signal intensity exceeds the threshold (the line Threshold in Fig. 5) becomes the fetch start reference point.

Next, in the graph of the waveform in Fig. 5, when the center time end point (MP in Fig. 5) at which the center time (Seek Span in Fig. 5) whose start point is the fetch start reference point identified as described above ends is compared with the threshold cross-down point (Cross Down in Fig. 5) at which the signal intensity last becomes equal to or lower than the threshold within the center time whose start point is the fetch start reference point, the last threshold cross-down point ends earlier, and accordingly the last threshold cross-down point becomes the fetch end reference point (EP in Fig. 5).

Then, using the fetch start reference point and the fetch end reference point identified as described above, the interval from the fetch start point (DSP in Fig. 5) which is the prefetch time (PreFetch in Fig. 5) before the fetch start reference point to the fetch end point (DEP in Fig. 5) which is the postfetch time (PostFetch in Fig. 5) after the fetch end reference point is treated as Width of one event, and the waveform within this interval is fetched as particle information about one particle.

It can be confirmed that, when the particle information fetch method according to the present technology is used, even in a case in which a waveform of signal intensity detected for one particle with respect to the measurement time measured treating, as a measurement target, a liquid in which particles are present has a plurality of peaks, the plurality of peaks is suitably fetched as particle information about the one particle.

Note that, when the threshold cross-down point that last appears within the center time is identified as the fetch end reference point as in the example illustrated in Fig. 5, the distance along the horizontal axis from the fetch start point to the fetch end point (the measurement duration of the target particle) varies depending on the position of the threshold cross-down point that last appears within the center time.

Fig. 6 is an image view of a case in which the center time is set shorter when particle information is detected from a waveform having a plurality of peaks. The waveform illustrated in Fig. 6 is the same as the waveforms illustrated in Fig. 4 and Fig. 5 and represents changes in the signal intensity detected for one particle with respect to the measurement time.

In the case illustrated in Fig. 6, the center time is set shorter than that in the case illustrated in Fig. 5. Because of this, in the case illustrated in Fig. 6, a point (SP in Fig. 6) at which the graph representing the signal intensity which is the same as that in the case illustrated in Fig. 5 exceeds the threshold (the line Threshold in Fig. 5) becomes the fetch start reference point, but, since the center time is shorter than that in the case illustrated in Fig. 5, when the center time end point (MP in Fig. 6) at which the center time (Seek Span in Fig. 6) whose start point is the identified fetch start reference point ends is compared with the threshold cross-down point (Cross Down in Fig. 6) at which the signal intensity last becomes equal to or lower than the threshold within the center time whose start point is the fetch start reference point, the center time end point ends earlier, and accordingly the center time end point becomes the fetch end reference point (EP in Fig. 6).

Then, using the fetch start reference point and the fetch end reference point identified as described above, the interval from the fetch start point (DSP in Fig. 6) which is the prefetch time (PreFetch in Fig. 6) before the fetch start reference point to the fetch end point (DEP in Fig. 6) which is the postfetch time (PostFetch in Fig. 6) after the fetch end reference point is treated as Width of one event, and the waveform within this interval is fetched as particle information about one particle.

Note that when the center time end point is identified as the fetch end reference point as in the example illustrated in Fig. 6, the distance along the horizontal axis from the fetch start point to the fetch end point (the measurement duration for one event, that is, Width) is the sum total of the set center time, prefetch time, and postfetch time and is a fixed value.

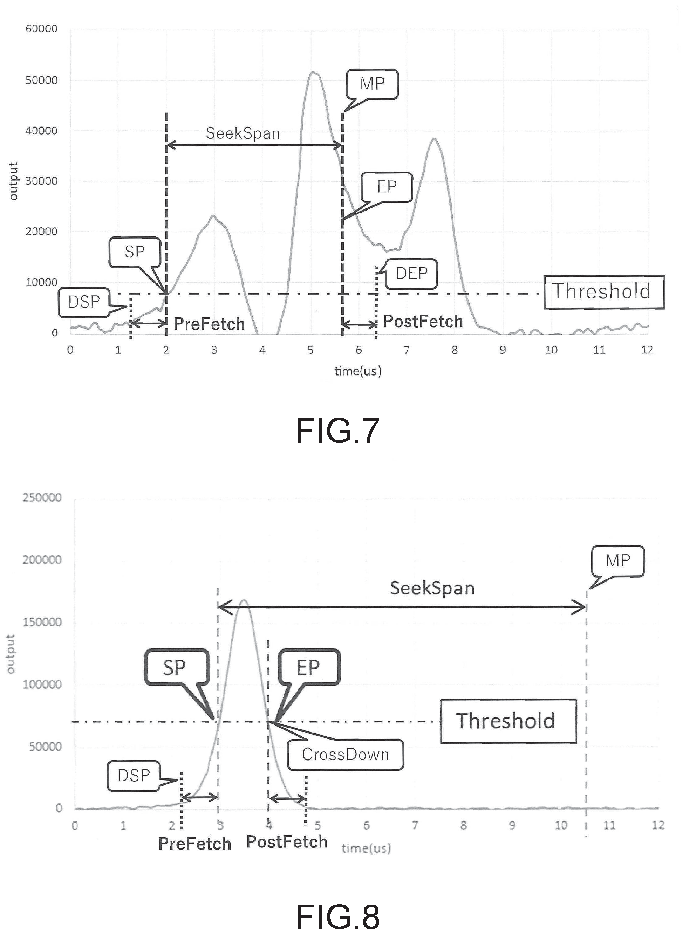

In addition, although the plurality of peaks included in the waveform can be fetched as particle information about the one particle in the example illustrated in Fig. 6, there can be a case in which all peaks related to one particle in a waveform are not fetched as particle information about the one particle when the center time end point is identified as the fetch end reference point. An example of this is illustrated in Fig. 7.

Fig. 7 is an image view of a case in which the center time is set even shorter than that in the example illustrated in Fig. 6. The waveform illustrated in Fig. 7 is the same as the waveforms illustrated in Fig. 4 to Fig. 6 and represents changes in the signal intensity detected for one particle with respect to the measurement time.

In the example illustrated in Fig. 7, when particle information about one particle is fetched in accordance with the procedure illustrated in Fig. 1, as illustrated in Fig. 7, the center time end point (MP in Fig. 7) at which the set center time (Seek Span in Fig. 7) ends becomes the fetch end reference point (EP in Fig. 7). In view of this, the distance from the fetch start point (DSP in Fig. 7) to the fetch end point (DEP in Fig. 7) becomes Width for one event by a procedure similar to that in the example described before, and the waveform within this interval is fetched as particle information about one particle.

However, it can be confirmed that not all the peaks related to the one particle included in the waveform are included in the interval from the fetch start point to the fetch end point as illustrated in Fig. 7. That is, it can be known that the center time set in the example illustrated in Fig. 7 is too short to suitably fetch particle information about the one particle from the target waveform of signal intensity with respect to the measurement time and is not appropriate as the value of the set center time.

That is, when the ratio of the number of events calculated with the distance (Width) along the horizontal axis from the fetch start point to the fetch end point as a fixed value by identifying the center time end point as the fetch end reference point to the total number of pieces of detected particle information (the total number of events) is high, as in the example illustrated in Fig. 7, there is a possibility that there are many cases in which particle information has not been able to be fetched as particle information about one particle from a waveform due to an excessively short set center time.

In other words, in the present technology, by treating, as an index, the ratio of the number of events calculated with the distance (Width) along the horizontal axis from the fetch start point to the fetch end point as a fixed value to the total number of pieces of fetched particle information (the total number of events), the appropriateness of the value of the set center time can be evaluated.

Note that the particle information fetch method according to the present technology can suitably fetch also particle information about a particle having one peak as particle information. An example of this is illustrated in Fig. 8.

The waveform illustrated in Fig. 8 represents changes in the signal intensity detected for one particle with respect to the measurement time and is the same as the waveform illustrated in Fig. 3.

In the example illustrated in Fig. 8, the center time (Seek Span in Fig. 8) is set in accordance with the procedure illustrated in Fig. 1, and the center time end point (MP in Fig. 8) at which the set center time ends is compared with the threshold cross-down point (Cross Down in Fig. 8) at which the signal intensity last becomes equal to or lower than the threshold within the center time whose start point is the fetch start reference point (SP in Fig. 8) at which the signal intensity with respect to the measurement time exceeds the threshold. In the case illustrated in Fig. 8, since the last threshold cross-down point ends earlier, this last threshold cross-down point becomes the fetch end reference point (EP in Fig. 8).

Then, similarly to other examples, using the identified fetch start reference point and fetch end reference point, the interval from the fetch start point (DSP in Fig. 8) which is the prefetch time (PreFetch in Fig. 8) before the fetch start reference point to the fetch end point (DEP in Fig. 8) which is the postfetch time (PostFetch in Fig. 8) after the fetch end reference point is treated as Width of one event, and the waveform within this interval is fetched as particle information about one particle.

It can be confirmed from Fig. 8 that the particle information fetch method according to the present technology can suitably fetch even particle information about a particle having one peak as particle information.

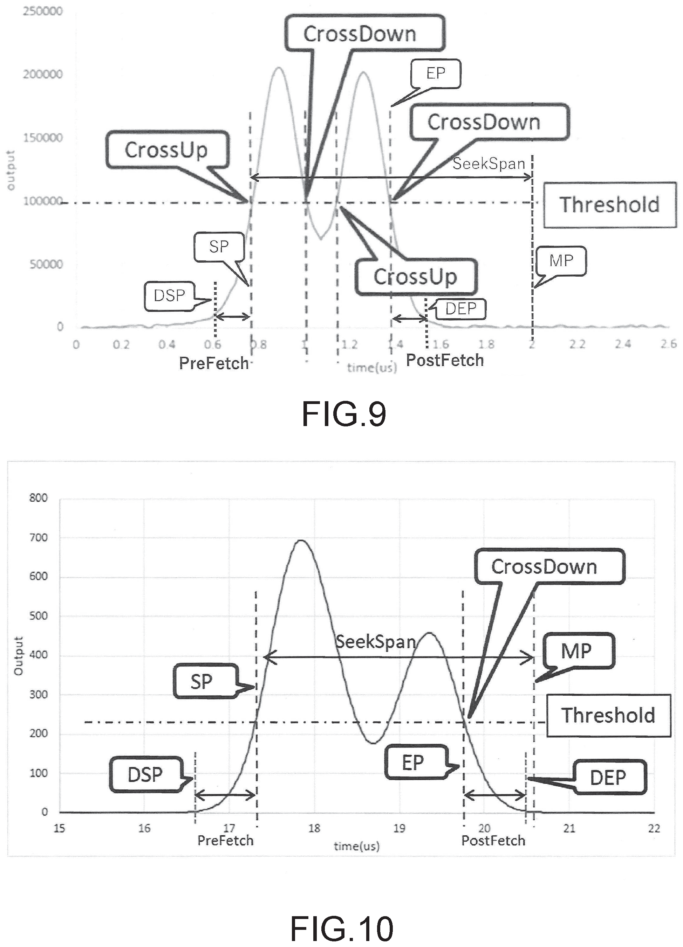

Next, even when a waveform different from the waveforms illustrated in Fig. 4 to Fig. 7 is used, the particle information fetch method according to the present technology certainly can suitably fetch a plurality of peaks from the waveform as particle information about one particle. An example of this is illustrated in Fig. 9.

The waveform illustrated in Fig. 9 represents changes in the signal intensity detected for one particle with respect to the measurement time treating human peripheral-blood lymphocytes as a measurement target.

The center time (Seek Span in Fig. 9) is set in accordance with the procedure illustrated in Fig. 1, and the center time end point (MP in Fig. 9) at which the set center time ends is compared with the threshold cross-down point (Cross Down on the right side in Fig. 9) at which the signal intensity last becomes equal to or lower than the threshold within the center time whose start point is the fetch start reference point (SP in Fig. 9) at which the signal intensity with respect to the measurement time exceeds the threshold. In the case illustrated in Fig. 9, since the last threshold cross-down point ends earlier, this last threshold cross-down point becomes the fetch end reference point (EP in Fig. 9).

Then, similarly to other examples, using the identified fetch start reference point and fetch end reference point, the interval from the fetch start point (DSP in Fig. 9) which is the prefetch time (PreFetch in Fig. 9) before the fetch start reference point to the fetch end point (DEP in Fig. 9) which is the postfetch time (PostFetch in Fig. 9) after the fetch end reference point is treated as Width of one event, and the waveform within this interval is fetched as particle information about one particle. Thereby, it can be confirmed also from the waveform in Fig. 9 that a plurality of peaks can be suitably fetched as particle information about one particle.

Furthermore, it is confirmed in an example illustrated in Fig. 10 that even for a particle detected as a waveform representing a shape different from the examples described before, the particle information fetch method according to the present technology can suitably fetch a plurality of peaks as particle information about one particle from the waveform. Note that the waveform illustrated in Fig. 10 represents changes in the signal intensity detected for one particle with respect to the measurement time treating HeLa cells derived from human cervical cancer as a measurement target.

The center time (Seek Span in Fig. 10) is set in accordance with the procedure illustrated in Fig. 1, and the center time end point (MP in Fig. 10) at which the set center time ends is compared with the threshold cross-down point (Cross Down on the right side in Fig. 10) at which the signal intensity last becomes equal to or lower than the threshold within the center time whose start point is the fetch start reference point (SP in Fig. 10) at which the signal intensity with respect to the measurement time exceeds the threshold. In the case illustrated in Fig. 10, since the last threshold cross-down point ends earlier, this last threshold cross-down point becomes the fetch end reference point (EP in Fig. 10).

Then, similarly to other examples, using the identified fetch start reference point and fetch end reference point, the interval from the fetch start point (DSP in Fig. 10) which is the prefetch time (PreFetch in Fig. 10) before the fetch start reference point to the fetch end point (DEP in Fig. 10) which is the postfetch time (PostFetch in Fig. 10) after the fetch end reference point is treated as Width of one event, and the waveform within this interval is fetched as particle information about one particle. Thereby, it can be confirmed also from the waveform in Fig. 10 that a plurality of peaks can be suitably fetched as particle information about one particle.

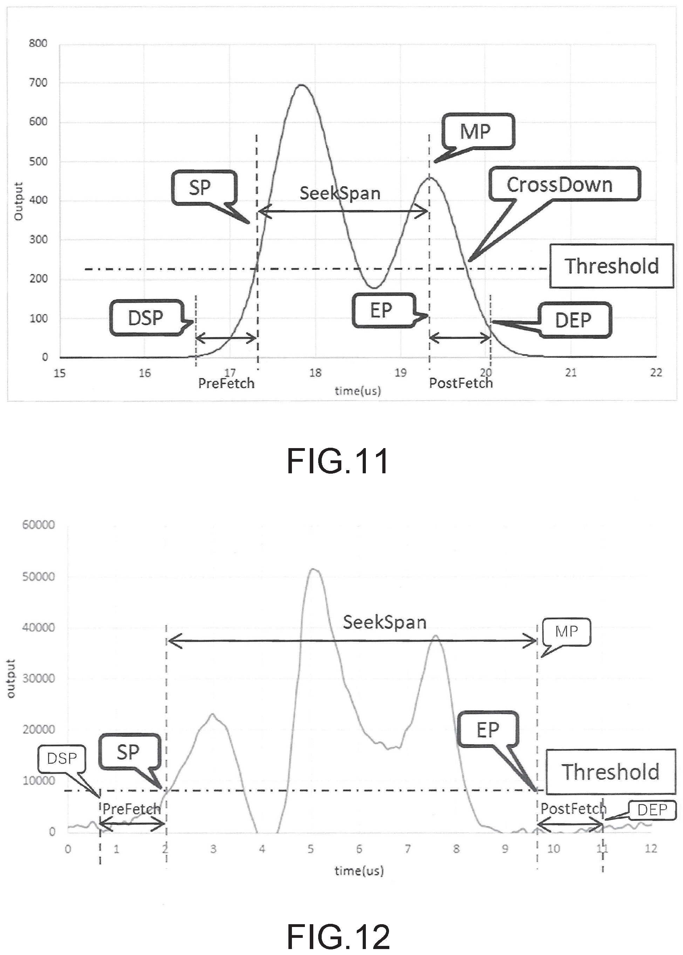

In addition, also in the waveform illustrated in Fig. 10, as illustrated in Fig. 11, when all the peaks related to one particle in the waveform are not fetched as particle information about the one particle for a reason that the center time is set shorter, the center time end point (MP in Fig. 11) that ends earlier than the last threshold cross-down point (Cross Down on the right side in Fig. 11) becomes the fetch end reference point (EP in Fig. 11).

In this case, similarly to the case illustrated in Fig. 6 or Fig. 7 described before, the ratio of the number of events calculated with the distance (Width) along the horizontal axis from the fetch start point to the fetch end point as a fixed value to the total number of pieces of detected particle information (the total number of events) increases. Because of this, it can be confirmed also for the particle that exhibits the waveform illustrated in Fig. 10 that, by using, as an index, the ratio of the number of events calculated with the distance (Width) along the horizontal axis from the fetch start point to the fetch end point as a fixed value to the total number of pieces of fetched particle information (the total number of events), the appropriateness of the value of the set center time can be evaluated.

### <Modification Example of Particle Information Fetch Method According to Present Technology>

Next, a modification example of the particle information fetch method according to the present technology is explained using Fig. 12. The waveform illustrated in Fig. 12 is the same as the waveform illustrated in Fig. 4.

In the particle information fetch method according to the modification example, the center time end point at which the center time whose start point is the fetch start reference point ends is identified as the fetch end reference point. In other respects, the particle information fetch method according to the modification example is the same as the particle information fetch method according to the present technology described before.

More specifically, in the graph of the waveform in Fig. 12, a point (SP in Fig. 12) at which the graph representing the signal intensity exceeds the threshold (the line Threshold in Fig. 12) becomes the fetch start reference point.

Next, in the graph of the waveform in Fig. 12, the center time end point (MP in Fig. 12) at which the center time (Seek Span in Fig. 12) whose start point is the fetch start reference point identified as described above ends is identified as the fetch end reference point (EP in Fig. 12).

Then, using the fetch start reference point and the fetch end reference point identified as described above, the interval from the fetch start point (DSP in Fig. 12) which is the prefetch time (PreFetch in Fig. 12) before the fetch start reference point to the fetch end point (DEP in Fig. 12) which is the postfetch time (PostFetch in Fig. 12) after the fetch end reference point is treated as Width of one event, and the waveform within this interval is fetched as particle information about one particle.

### <Setting of Center Time>

In the present technology, particle information about one particle is suitably fetched by setting an appropriate center time and identifying the fetch end reference point with reference to the center time. Because of this, the setting of the center time is important. Hereinbelow, a suitable center-time setting method in the particle information fetch method according to the present technology is explained.

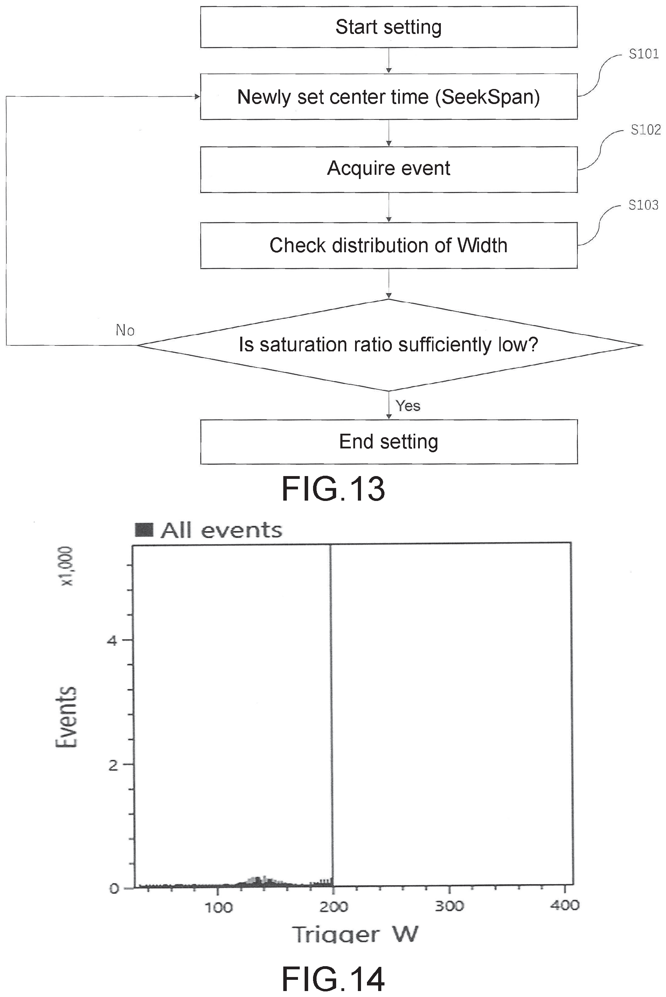

Fig. 13 illustrates a flowchart to be followed when the center time is set. First, as a first step S101, the center time (Seek Span) is tentatively set. For example, the center time can be tentatively set to a range in which particle information about one particle can be included, on the basis of the waveform pattern of changes in the signal intensity detected on the vertical axis with respect to the measurement time on the horizontal axis.

Next, as a second step S102, an event is acquired with reference to the set center time, and, as a third step S103, the distribution of Width calculated for each acquired event is checked. For example, the distribution of Width can be checked on a histogram.

As described before, when the ratio of the number of events calculated with Width as a fixed value by identifying the center time end point as the fetch end reference point to the total number of pieces of fetched particle information (the total number of events) is high, the histogram representing the distribution of Width becomes like the one illustrated in Fig. 14, for example.

Here, the histogram illustrated in Fig. 14 plots the values of Width (units: clocks) on the horizontal axis and the number of events on the vertical axis. When the center time end point is identified as the fetch end reference point, Width is a fixed value, and its value is the maximum. In the example in Fig. 14, when Width is 200, the center time end point is identified as the fetch end reference point, and Width is a fixed value.

In the histogram in Fig. 14, the number of events when Width is 200 is markedly greater than those when Width is not 200. That is, the ratio of particle information detected by identifying the center time end point as the fetch end reference point to the total number of pieces of detected particle information (the total number of events) is high.

Here, as events when Width is 200 in Fig. 14, for example, an event of a particle whose relationship to the set center time (Seek Span) is like the waveform in Fig. 6 and an event of a particle whose relationship to the set center time (Seek Span) is like the waveform in Fig. 7 are counted.

When the total number of pieces of detected particle information (the total number of events) is defined as 100%, and the ratio of particle information detected by identifying the center time end point as the fetch end reference point is defined as a saturation ratio, if the saturation ratio is sufficiently low, the set center time is identified as an appropriate center time, and the setting is ended in accordance with the procedure in Fig. 13.

On the other hand, when the ratio of particle information detected by identifying the center time end point as the fetch end reference point to the total number of pieces of detected particle information (the total number of events) is high, and the saturation ratio is high, the center time is reset to a longer value in accordance with the procedure in Fig. 13.

Although the reference value to be used when the center time is reset is affected also by the characteristics of measurement-target particles of a target waveform, the flow rate during measurement, and the like, for example, the value of the center time can be adjusted within a range up to a maximum value of 10 µs to 20 µs or the like.

Then, events are newly acquired using the set center time, and the distribution of Width calculated for each acquired event is checked.

As illustrated in the procedure in Fig. 13, the operation described above is repeated until the saturation ratio exhibits a sufficiently small value. For example, the saturation ratio can be set to a certain value which is equal to or lower than 10%, equal to or lower than 8%, equal to or lower than 5%, equal to or lower than 3%, and the like.

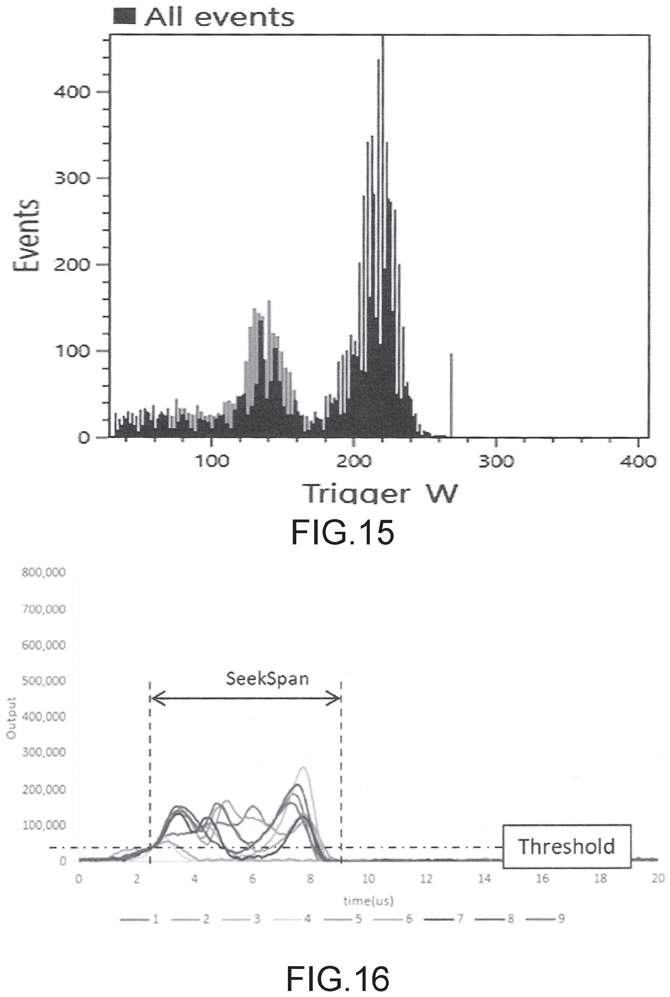

When the saturation ratio has become equal to or lower than the certain value described above and has become sufficiently small, a histogram representing the distribution of Width becomes like the one in Fig. 15, for example. In the example in Fig. 15, when Width is 270, the center time end point is identified as the fetch end reference point, and Width becomes a fixed value. Note that the saturation ratio in the case illustrated in Fig. 15 is 0.96%.

It can be confirmed in the histogram in Fig. 15 that the number of events when Width is 270 is not markedly greater than those when Width is not 270, and the saturation ratio is sufficiently low.

Since the saturation ratio is sufficiently low in the example illustrated in Fig. 15, the distribution of events whose Width is smaller than 270 can be checked suitably. In this example, for example, the distribution of events of particles that exhibit a relationship to the set center time (Seek Span) like the waveform in Fig. 5 and have a plurality of peaks as particle information, events of particles that exhibit a relationship to the set center time (Seek Span) like the waveform in Fig. 8 and have one peak as particle information, and the like can be checked suitably.

In accordance with the procedure in Fig. 13, when the saturation ratio becomes sufficiently low as in the example illustrated in Fig. 15, the set center time is identified as an appropriate center time, and the setting is ended.

### <Measurement Target>

The present technology relates to a particle information fetch method in which particle information about particles is fetched from a waveform of signal intensity with respect to the measurement time measured treating, as a measurement target, as a liquid in which the particles are present, and, by setting the center time and fetching particle information with reference to the center time as described before, the effect of the sizes, shapes, and quality of the particles present in the measurement-target liquid can be reduced.

The liquid, in which particles are present and which is the measurement target related to a waveform which is the target according to present technology, is not particularly limited. Because of this, as described before, even when one piece of particle information has a complex waveform or has a simple waveform, particle information can be suitably fetched without being limited by the shape of the waveform of the particle information.

On the other hand, in the particle information fetch method according to the present technology, Width (equivalent to the computation zone) lengthens depending on the set center time. Because of this, for example, when the concentration of particles is high compared to the set center time, there can be a case in which information about a plurality of events is redundantly included undesirably within the range of Width. Because of this, the present technology may use, in combination, the particle information fetch method according to the present technology and the normal particle information fetch method in which the center time is not set, depending on the measurement target related to the target waveform.

Particularly, it is expected that, for example, particles that are present in a liquid as a measurement target that is suitably fetched by the particle information fetch method according to the present technology are particles with large particle sizes which are equal to or greater than 10 µm, equal to or greater than 30 µm, equal to or greater than 50 µm, or the like.

In addition, for example, it is suitable to use the particle information fetch method according to the present technology also when particle information has a complex waveform for a reason that the surface shapes of particles that are present in a liquid are complex. For example, examples of particles whose surface shapes are complex include carriers carrying biological components such as cells, (single) carriers (not carrying biological components), asymmetric particles, and the like.

The carriers may carry one or more cells or a plurality of cells. In addition, biological components (e.g., cells or cell-derived components (e.g., secretions)) may be carried. For example, the carriers carrying biological components include carriers capturing biological components and carriers encapsulating biological components. For example, the carriers may be carriers used for secretion analysis. In addition, for example, carriers encapsulating biological components may be emulsions. The emulsions may be multiple emulsions. For example, examples of multiple emulsions include oil-in-water-in-oil type ("o/w/o"), water-in-oil-in-water type ("w/o/w"), and the like. Furthermore, the carriers may be in a form in which beads or the like carry biological components. Examples of such a form include also supports such as support bodies and charged particles.

In addition, for example, cells carried in the carriers may include antibody-secreting cells and/or antibody-binding cells. Although the shapes of the carriers are not particularly limited, the carriers may have any particle shapes such as spherical shapes, oval shapes, or rod-like shapes.

Furthermore, the cause of particle information exhibiting a complex waveform is the particle sizes or shapes of particles that are present in a measurement-target liquid in some cases, but may be the close proximity of a plurality of particles flowing together in some cases. Accordingly, the frequency of passage of particles through a detecting section may be lowered by adjusting the number of particles per unit volume of a measurement-target liquid to be equal to or smaller than a certain number. For example, redundant inclusion of information about a plurality of events within the range of Width can be avoided by adjusting the number of particles that are present in 100 µl of a measurement-target liquid to be equal to or smaller than 10,000,000, equal to or smaller than 10,000, equal to or smaller than 1,000, equal to or smaller than 100, or the like.

In addition, the frequency of passage of particles through the detecting section may be lowered by adjusting the flow rate per unit time of a measurement-target liquid flowing through a flow channel in the microparticle analyzing apparatus to be lower. For example, the adjustment of the flow rate may be achieved by changing the sheath pressure or by changing the orifice size.

Here, the biological components may be components obtained from a living body. Examples of the biological components include bio-particles, components included in bio-particles, and secretions secreted from bio-particles, but are not limited to them. The biological components encompass various types of components derive from a living body.

For example, the bio-particles may be living-body-derived particles such as cells, microorganisms, or bio-related particles. The bio-particles may be one particle or may be a group (particularly, a set) of a plurality of living-body-derived particles. For example, the bio-particles may be cells such as animal cells (e.g., hematopoietic cells) or plant cells, bacteria such as E. coli, viruses such as Tobacco mosaic viruses, or microorganisms such as fungi such as yeast.

Examples of the components included in bio-particles include: bio-particle constituent components that are included in cells such as chromosomes, liposomes, mitochondria, and various types of organelles (organelles); and living-body-derived components such as bio-related polymers such as nucleic acids, proteins, lipids, glycans or complexes thereof, but are not limited to them.

Examples of the secretions secreted from bio-particles include exosomes, microvesicles, and apoptotic bodies, but are not limited to them. Exosomes are membrane vesicles formed when endosomes generated inside cells by endocytosis further invaginate, and the resulting vesicles are released outside the cells. Examples of membrane proteins commonly contained in exosomes include tetraspanins (for example, CD9, CD63, and CD81), membrane proteins such as integrins, and major histocompatibility complex (MHC) molecules.

### [Particle Distinguishing Method]

Particles can be distinguished also on the basis of the shape of the waveform of particle information fetched by executing the particle information fetch method according to the present technology. Examples of this are explained using Fig. 16 to Fig. 18.

Each of Fig. 16 to Fig. 18 is a graph obtained by fetching nine pieces of particle information by the present technology and superimposing nine waveforms of the fetched particle information.

Fig. 16 relates to waveforms obtained when particles that are present in a liquid are supports which are single carriers not carrying cells or the like. As the supports, non-spherical beads which are the same as those used as particles in Fig. 4 were used.

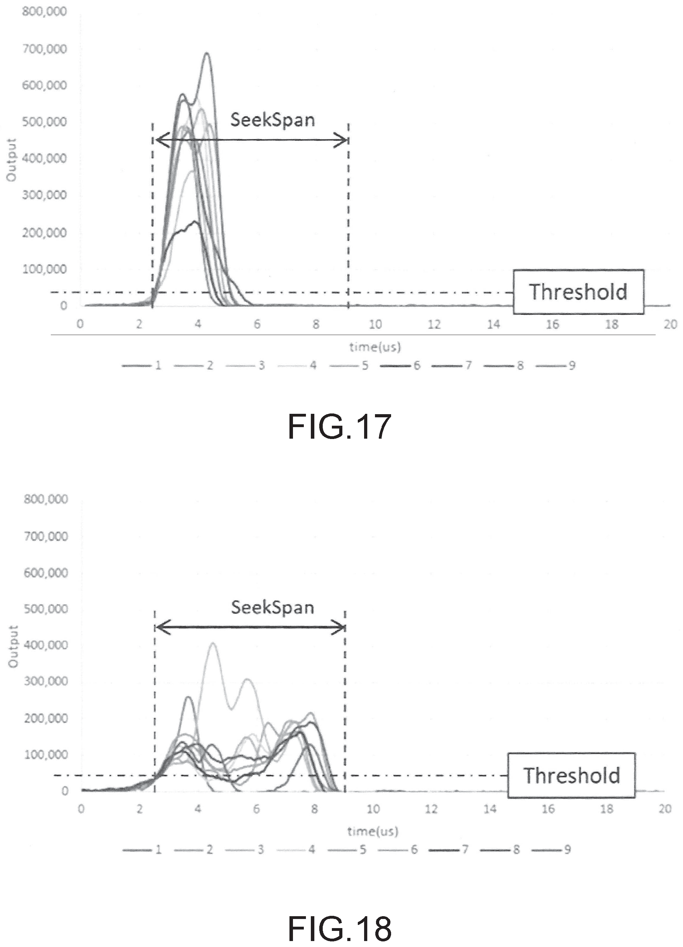

Fig. 17 relates to waveforms obtained when particles that are present a liquid are cells. As the cells, Jurkat was used.

Fig. 18 relates to waveforms obtained when particles that are present in a liquid are supports carrying cells. The cells were Jurkat, which is the same as that use in Fig. 17, and the supports were the same support bodies as those used in Fig. 16.

Although the waveforms of the nine pieces of particle information superimposed in each of Figs. 16 to 18 exhibit variation, the shapes of the fetched nine waveforms are similar, and it can be confirmed that the present technology has been able to suitably fetch the particle information.

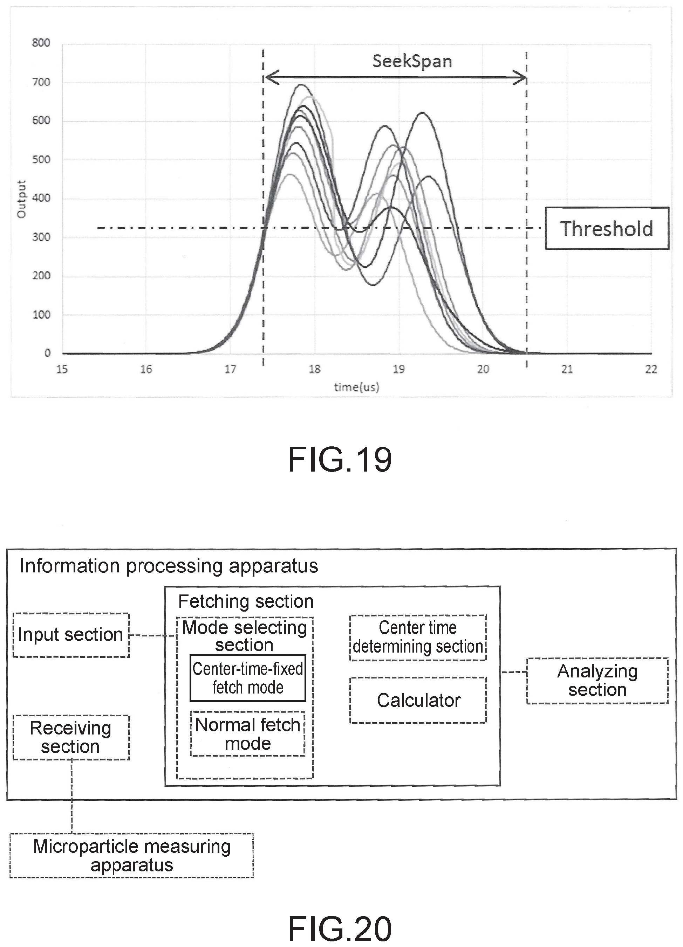

In addition, for HeLa cells derived from human cervical cancer illustrated in the example illustrated in Fig. 10, by comparing, by a method similar to those for Figs. 16 to 18 described before, the shapes of the waveforms of particle information fetched by executing the particle information fetch method according to the present technology as illustrated in Fig. 19, it can be confirmed that the present technology has been able to suitably fetch the particle information.

Furthermore, it is possible to distinguish whether particles that are present in a liquid are particles such as cell or supports such as carriers with reference to the shapes of the waveforms of particle information illustrated in Figs. 16 to 19.

Furthermore, by combining an identification technique using compounds or the like specific to biological components such as barcode molecules, fluorophores, affinity molecules, or reagent molecules described before, it is possible to distinguish between single carriers or the like not carrying cells or the like and carriers or the like carrying cells.

### [Measurement Target Analysis Method]

It is possible also to analyze a measurement target by using particle information fetched by executing the particle information fetch method according to the present technology. For example, it is possible to implement analysis of particle size, shape, quality, and the like, analysis of biological components and the like in a measurement target from particle information, and the like using the intensity (Hight of a waveform in the vertical axis direction) of the signal intensity of a waveform of particle information, the integrated value (Area) of the signal intensity of a waveform of particle information, and the like. In this case, depending on the purpose of analysis, fetched particle information may be used after being processed as necessary as long as effects of the present technology are not significantly impaired.

### [Particle Information Detection Program]

As described before, the present technology can suitably fetch particle information while reducing the effect of the sizes, shapes, and quality of particles that are present in a measurement-target liquid, from a waveform of signal intensity with respect to the measurement time measured treating, as a measurement target, the liquid in which the particles are present. It is also possible to construct a particle information fetch program that controls the particle information fetch process.

That is, the present technology can be implemented as a particle information fetch program that fetches particle information about particles from a waveform of signal intensity with respect to the measurement time measured treating, as a measurement target, a liquid in which the particles are present, the particle information fetch program including, using a preset prefetch time, postfetch time, threshold, and center time: identifying, in the waveform, a point at which the signal intensity exceeds the threshold as the fetch start reference point; identifying the fetch end reference point with the fetch start reference point as a start point; and fetching, from the waveform, a waveform from the fetch start point which is the prefetch time before the fetch start reference point to the fetch end point which is the postfetch time after the fetch end reference point as particle information about one particle. Here, whichever ends earlier of the center time end point at which the center time ends and the threshold cross-down point at which the signal intensity last becomes equal to or lower than the threshold within the center time whose start point is the fetch start reference point may be identified as the fetch end reference point.

By execution of the particle information fetch program according to the present technology, the present technology can suitably fetch particle information about particles from a waveform of signal intensity with respect to the measurement time measured treating, as a measurement target, a liquid in which the particles are present. Note that the particle information fetch program according to the present technology may be combined with any program depending on the purpose of the program as necessary as long as desired physical properties are not impaired.

For example, the particle information fetch program according to the present technology can be stored as a program in a personal computer or a hardware resource including a control section including a CPU or the like, a recording medium (such as a non-volatile memory (including a USB memory), an HDD, or a CD), and the like and can be caused to function by the personal computer or the control section.

### [Information Processing Apparatus]

The present technology can be implemented also as an information processing apparatus that executes the present technology.

Fig. 20 schematically illustrates an example of the overall configuration of the information processing apparatus according to the present technology. In the figure, portions represented by solid lines indicate constituent elements essential for the information processing apparatus according to the present technology, and portions represented by dotted lines indicate constituent elements that the information processing apparatus according to the present technology optionally includes. Note that the constituent elements illustrated in Fig. 20 are examples of components of the information processing apparatus according to the present technology, and the information processing apparatus according to the present technology may include constituent elements other than the constituent elements illustrated in the figure as long as the performance of the present technology is not impaired.

### <Fetching Section>

The information processing apparatus according to the present technology includes a fetching section that fetches particle information about particles from a waveform of signal intensity with respect to the measurement time included in measurement information measured treating, as a measurement target, a liquid in which the particles are present, and the fetching section has a center-time-fixed fetch mode. Furthermore, the fetching section may have a normal fetch mode.

The center-time-fixed fetch mode is a setting by which the information processing apparatus according to the present technology implements the particle information fetch method according to the present technology. That is, using the preset prefetch time, postfetch time, threshold, and center time, a point at which the signal intensity exceeds the threshold is identified as the fetch start reference point, the fetch end reference point is identified with the fetch start reference point as a start point, and, from the waveform, a waveform from the fetch start point which is the prefetch time before the fetch start reference point to the fetch end point which is the postfetch time after the fetch end reference point is fetched as particle information about one particle. Here, whichever ends earlier of the center time end point at which the center time ends and the threshold cross-down point at which the signal intensity last becomes equal to or lower than the threshold within the center time whose start point is the fetch start reference point may be identified as the fetch end reference point.

In addition, the center-time-fixed fetch mode may have a plurality of center-time-fixed fetch modes in which the conditions have been varied in advance.

Note that, similarly to the particle information fetch method according to the present technology, the prefetch time, the postfetch time, the threshold, and the center time can be set to certain values with reference to the description of the present specification.

The fetching section included in the information processing apparatus according to the present technology may include a center time determining section. The center time determining section is a section that executes the suitable center-time setting method described before. That is, the center time determining section is a section that adjusts and sets the center time such that the ratio of the number of pieces of particle information fetched by identifying the center time end point as the fetch end reference point to the total number of pieces of the fetched particle information becomes equal to or lower than 10%.

In the normal fetch mode, a point at which the signal intensity exceeds the threshold is identified as the fetch start reference point, the threshold cross-down point at which the signal intensity becomes equal to or lower than the threshold is identified as the fetch end reference point, and, from the waveform, a waveform from the fetch start point which is the prefetch time before the fetch start reference point to the fetch end point which is the postfetch time after the fetch end reference point is fetched as particle information about one particle.

The fetching section included in the information processing apparatus according to the present technology may include a mode selecting section that selects the center-time-fixed fetch mode and the normal fetch mode. Here, the normal fetch mode is a mode in which the normal particle information fetch method described before is executed. By enabling selection between the center-time-fixed fetch mode and the normal fetch mode, it is possible to select a mode according to a measurement target and to effectively avoid situations in which information about a plurality of events is redundantly included within the range of Width.

### <Input Section>

In a case in which the information processing apparatus according to the present technology includes the mode selecting section that selects the center-time-fixed fetch mode and the normal fetch mode, the information processing apparatus may further include an input section to which mode selection information for selecting a mode is input. In this case, the mode selecting section selects the center-time-fixed fetch mode and the normal fetch mode on the basis of the mode selection information.

Whereas the method of inputting the mode selection information to the input section is not particularly limited in a case in which the information processing apparatus according to the present technology includes the input section, for example, examples of the method include manual input by a user, reading of a measurement target by the information processing apparatus according to the present technology, reading of measurement information by the information processing apparatus according to the present technology, and the like.

For example, examples of reading of a measurement target include methods such as sensing of the nozzle shape of a measurement target, sensing of a liquid including an identification method by supplying the liquid, and reading of an identification number provided on a container or the like of a measurement-target liquid in which particles are present. As the identification number to be used, for example, any method that are used as an identification number such as a barcode or a QR code can be used. The reading may be performed by the information processing apparatus according to the present technology, but an apparatus that has a measurement-target measurement function and is different from the information processing apparatus according to the present technology may implement the reading by performing the reading and transferring a result of the reading to the information processing apparatus according to the present technology.

Reading of measurement information can be implemented by: a method in which the information processing apparatus according to the present technology reads measurement information obtained by measurement of a measurement target; a method in which the information processing apparatus according to the present technology uses any transmitting/receiving method to receive measurement information from an apparatus that has a measurement-target measurement function and is different from the information processing apparatus according to the present technology, and the information processing apparatus according to the present technology reads the received measurement information; a method in which a result of reading from measurement information by an apparatus that has a measurement-target measurement function and is different from the information processing apparatus according to the present technology is transferred to the information processing apparatus according to the present technology; and the like.

### <Calculator>

In a case in which the information processing apparatus according to the present technology includes the mode selecting section that selects the center-time-fixed fetch mode and the normal fetch mode, the information processing apparatus may further include a calculator that calculates the particle sizes of particles from the particle information. By including the calculator, the information processing apparatus according to the present technology can suitably read measurement information and select a suitable detection mode.

That is, when the average particle size of particles is a large particle size which is equal to or greater than a certain particle size relative to the average particle size of particles that are present in a measurement-target liquid calculated by the calculator, by the mode selecting section selecting the center-time-fixed fetch mode, it is possible to more effectively avoid redundant inclusion of information about a plurality of events within the range of Width.

For example, the calculator calculates the average particle size of the particles using, as indices, the intensity (Height of a waveform in the vertical axis direction) of the signal intensity of the waveform of particle information, the integrated value (Area) of the signal intensity of the waveform of particle information, and the like.

An average particle size on the basis of which it is determined whether the average particle size of particles is a large particle size which is equal to or greater than a certain particle size is affected also by the shapes and concentration of particles that are present in a measurement-target liquid, and, for example, a value which is equal to or greater than 10 µm, equal to or greater than 30 µm, equal to or greater than 50 µm, and the like can be adopted.

When the mode selecting section included in the information processing apparatus according to the present technology has selected a mode, the information processing apparatus according to the present technology may change parameters related to measurement conditions of the microparticle analyzing apparatus depending on the selected mode. For example, in the center-time-fixed fetch mode, the flow rate of a flow channel in the microparticle dispensing apparatus may be controlled. For example, the control of the flow rate may be achieved by changing the sheath pressure or by changing the orifice size. When these are changed, for example, the changes can be performed by any method such as manual setting by a user, reading of a measurement target by the information processing apparatus according to the present technology, reading of measurement information by the information processing apparatus according to the present technology, and the like.

### <Analyzing Section>

The information processing apparatus according to the present technology may further include an analyzing section that analyzes the waveform of fetched particle information. By including the analyzing section, for example, the information processing apparatus according to the present technology can analyze biological components and the like in a measurement target. In addition, the analyzing section can also use fetched particle information after being processed depending on the purpose of analysis as long as effects of the present technology are not significantly impaired.

In the information processing apparatus according to the present technology, for example, a waveform of signal intensity with respect to the measurement time which is a target from which the fetching section fetches particle information about particles may be measurement information that has been measured by a microparticle analyzing apparatus described later and whose measurement target is a liquid in which the particles are present.

### <Receiving Section>

The information processing apparatus according to the present technology may further include a receiving section that receives the waveform. For example, by including the receiving section, it is possible to efficiently receive measurement information from the microparticle analyzing apparatus, and the information processing apparatus according to the present technology can read the measurement information. In addition, in a case in which the information processing apparatus according to the present technology includes the input section, by including the receiving section, the information processing apparatus can efficiently perform input of mode selection information to the input section.

### <Other Constituent Elements>

The information processing apparatus according to the present technology may include other constituent elements other than the constituent elements described above as necessary, as long as desired physical properties are not impaired. For example, examples of the other constituent elements include a storage section that stores measurement information and the like, a computing section, and the like.

In the information processing apparatus according to the present technology, the individual constituent elements described above can be implemented by any method. For example, each constituent element can be caused to function, for example, by a processing apparatus such as a personal computer having incorporated therein the component or by a control section including a CPU or the like of a hardware resource including the control section, a recording medium (such as a non-volatile memory (including a USB memory), an HDD, or a CD), and the like and having stored therein the component as a program. The individual constituent elements described above may be included in a single processing apparatus or may be included dispersedly in a plurality of processing apparatuses.

### [Information Processing System]

In a case in which a system combining a plurality of processing apparatuses such as personal computers is constructed as described before, the system as a whole executes the present technology.

That is, the present technology can be implemented as an information processing system including: a measurement system that measures a waveform of signal intensity with respect to the measurement time treating, as a measurement target, a liquid in which the particles are present; a reception system that receives the waveform from the measurement system; and a fetching system that fetches particle information about the particles from the waveform, in which, using a preset prefetch time, postfetch time, threshold, and center time, the fetching system: identifies a point at which the signal intensity exceeds the threshold as the fetch start reference point; identifies the fetch end reference point with the fetch start reference point as a start point; and fetches, from the waveform, a waveform from the fetch start point which is the prefetch time before the fetch start reference point to the fetch end point which is the postfetch time after the fetch end reference point as particle information about one particle. Here, whichever ends earlier of the center time end point at which the center time ends and the threshold cross-down point at which the signal intensity last becomes equal to or lower than the threshold within the center time whose start point is the fetch start reference point may be identified as the fetch end reference point.

The information processing apparatus according to the present technology and each processing apparatus included in the information processing system according to the present technology can be implemented as finished products, but also can be implemented in a form in which the information processing apparatus or each processing apparatus is incorporated into a measuring apparatus such as a microparticle analyzing apparatus that can measure, as a measurement target, a liquid in which particles are present.

### <Microparticle Analyzing Apparatus>

As described before, by being incorporated into a microparticle analyzing apparatus, the information processing apparatus according to the present technology can be implemented as a microparticle analyzing apparatus including the information processing apparatus according to the present technology. Hereinbelow, as an example of the microparticle analyzing apparatus, a biological sample analyzer is explained. Note that, in the biological sample analyzer, for example, the present technology can be implemented by being incorporated into an information processing unit or the like.

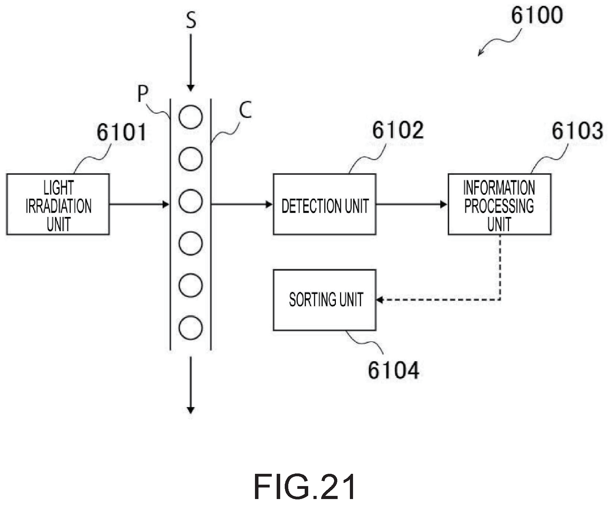

Fig. 21 shows an example configuration of a biological sample analyzer of the present disclosure. A biological sample analyzer 6100 shown in Fig. 21 includes: a light irradiation unit 6101 that irradiates a biological sample S flowing in a flow channel C with light; a detection unit 6102 that detects light generated by irradiating the biological sample S; and an information processing unit 6103 that processes information about the light detected by the detection unit. The biological sample analyzer 6100 is a flow cytometer or an imaging cytometer, for example. The biological sample analyzer 6100 may include a sorting unit 6104 that sorts out specific biological particles P in a biological sample. The biological sample analyzer 6100 including the sorting unit is a cell sorter, for example.

### (Biological Sample)

The biological sample S may be a liquid sample containing biological particles. The biological particles are cells or non-cellular biological particles, for example. The cells may be living cells, and more specific examples thereof include blood cells such as erythrocytes and leukocytes, and germ cells such as sperms and fertilized eggs. Also, the cells may be those directly collected from a sample such as whole blood, or may be cultured cells obtained after culturing. The non-cellular biological particles are extracellular vesicles, or particularly, exosomes and microvesicles, for example. The biological particles may be labeled with one or more labeling substances (such as a dye (particularly, a fluorescent dye) and a fluorochrome-labeled antibody). Note that particles other than biological particles may be analyzed by the biological sample analyzer of the present disclosure, and beads or the like may be analyzed for calibration or the like.

### (Flow Channel)

The flow channel C is designed so that a flow of the biological sample S is formed. In particular, the flow channel C may be designed so that a flow in which the biological particles contained in the biological sample are aligned substantially in one row is formed. The flow channel structure including the flow channel C may be designed so that a laminar flow is formed. In particular, the flow channel structure is designed so that a laminar flow in which the flow of the biological sample (a sample flow) is surrounded by the flow of a sheath liquid is formed. The design of the flow channel structure may be appropriately selected by a person skilled in the art, or a known one may be adopted. The flow channel C may be formed in a flow channel structure such as a microchip (a chip having a flow channel on the order of micrometers) or a flow cell. The width of the flow channel C is 1 mm or smaller, or particularly, may be not smaller than 10 µm and not greater than 1 mm. The flow channel C and the flow channel structure including the flow channel C may be made of a material such as plastic or glass.

The biological sample analyzer of the present disclosure is designed so that the biological sample flowing in the flow channel C, or particularly, the biological particles in the biological sample are irradiated with light from the light irradiation unit 6101. The biological sample analyzer of the present disclosure may be designed so that the irradiation point of light on the biological sample is located in the flow channel structure in which the flow channel C is formed, or may be designed so that the irradiation point is located outside the flow channel structure. An example of the former case may be a configuration in which the light is emitted onto the flow channel C in a microchip or a flow cell. In the latter case, the biological particles after exiting the flow channel structure (particularly, the nozzle portion thereof) may be irradiated with the light, and a flow cytometer of a jet-in-air type can be adopted, for example.

### (Light Irradiation Unit)

The light irradiation unit 6101 includes a light source unit that emits light, and a light guide optical system that guides the light to the irradiation point. The light source unit includes one or more light sources. The type of the light source(s) is a laser light source or an LED, for example. The wavelength of light to be emitted from each light source may be any wavelength of ultraviolet light, visible light, and infrared light. The light guide optical system includes optical components such as beam splitters, mirrors, or optical fibers, for example. The light guide optical system may also include a lens group for condensing light, and includes an objective lens, for example. There may be one or more irradiation points at which the biological sample and light intersect. The light irradiation unit 6101 may be designed to collect light emitted onto one irradiation point from one light source or different light sources.

### (Detection Unit)

The detection unit 6102 includes at least one photodetector that detects light generated by emitting light onto biological particles. The light to be detected may be fluorescence or scattered light (such as one or more of the following: forward scattered light, backscattered light, and side scattered light), for example. Each photodetector includes one or more light receiving elements, and has a light receiving element array, for example. Each photodetector may include one or more photomultiplier tubes (PMTs) and/or photodiodes such as APDs and MPPCs, as the light receiving elements. The photodetector includes a PMT array in which a plurality of PMTs is arranged in a one-dimensional direction, for example. The detection unit 6102 may also include an image sensor such as a CCD or a CMOS. With the image sensor, the detection unit 6102 can acquire an image (such as a bright-field image, a dark-field image, or a fluorescent image, for example) of biological particles.

The detection unit 6102 includes a detection optical system that causes light of a predetermined detection wavelength to reach the corresponding photodetector. The detection optical system includes a spectroscopic unit such as a prism or a diffraction grating, or a wavelength separation unit such as a dichroic mirror or an optical filter. The detection optical system is designed to disperse the light generated by light irradiation to biological particles, for example, and detect the dispersed light with a larger number of photodetectors than the number of fluorescent dyes with which the biological particles are labeled. A flow cytometer including such a detection optical system is called a spectral flow cytometer. Further, the detection optical system is designed to separate the light corresponding to the fluorescence wavelength band of a specific fluorescent dye from the light generated by the light irradiation to the biological particles, for example, and cause the corresponding photodetector to detect the separated light.

The detection unit 6102 may also include a signal processing unit that converts an electrical signal obtained by a photodetector into a digital signal. The signal processing unit may include an A/D converter as a device that performs the conversion. The digital signal obtained by the conversion performed by the signal processing unit can be transmitted to the information processing unit 6103. The digital signal can be handled as data related to light (hereinafter, also referred to as "light data") by the information processing unit 6103. The light data may be light data including fluorescence data, for example. More specifically, the light data may be data of light intensity, and the light intensity may be light intensity data of light including fluorescence (the light intensity data may include feature quantities such as area, height, and width).

### (Information Processing Unit)

The information processing unit 6103 includes a processing unit that performs processing of various kinds of data (light data, for example), and a storage unit that stores various kinds of data, for example. In a case where the processing unit acquires the light data corresponding to a fluorescent dye from the detection unit 6102, the processing unit can perform fluorescence leakage correction (a compensation process) on the light intensity data. In the case of a spectral flow cytometer, the processing unit also performs a fluorescence separation process on the light data, and acquires the light intensity data corresponding to the fluorescent dye. The fluorescence separation process may be performed by an unmixing method disclosed in JP 2011-232259 A, for example. In a case where the detection unit 6102 includes an image sensor, the processing unit may acquire morphological information about the biological particles, on the basis of an image acquired by the image sensor. The storage unit may be designed to be capable of storing the acquired light data. The storage unit may be designed to be capable of further storing spectral reference data to be used in the unmixing process.

In a case where the biological sample analyzer 6100 includes the sorting unit 6104 described later, the information processing unit 6103 can determine whether to sort the biological particles, on the basis of the light data and/or the morphological information. The information processing unit 6103 then controls the sorting unit 6104 on the basis of the result of the determination, and the biological particles can be sorted by the sorting unit 6104.

The information processing unit 6103 may be designed to be capable of outputting various kinds of data (such as light data and images, for example). For example, the information processing unit 6103 can output various kinds of data (such as a two-dimensional plot or a spectrum plot, for example) generated on the basis of the light data. The information processing unit 6103 may also be designed to be capable of accepting inputs of various kinds of data, and accepts a gating process on a plot by a user, for example. The information processing unit 6103 may include an output unit (such as a display, for example) or an input unit (such as a keyboard, for example) for performing the output or the input.

The information processing unit 6103 may be designed as a general-purpose computer, and may be designed as an information processing device that includes a CPU, a RAM, and a ROM, for example. The information processing unit 6103 may be included in the housing in which the light irradiation unit 6101 and the detection unit 6102 are included, or may be located outside the housing. Further, the various processes or functions to be executed by the information processing unit 6103 may be realized by a server computer or a cloud connected via a network.

### (Sorting Unit)

The sorting unit 6104 performs sorting of biological particles, in accordance with the result of determination performed by the information processing unit 6103. The sorting method may be a method by which droplets containing biological particles are generated by vibration, electric charges are applied to the droplets to be sorted, and the traveling direction of the droplets is controlled by an electrode. The sorting method may be a method for sorting by controlling the traveling direction of biological particles in the flow channel structure. The flow channel structure has a control mechanism based on pressure (injection or suction) or electric charge, for example. An example of the flow channel structure may be a chip (the chip disclosed in JP 2020-76736 A, for example) that has a flow channel structure in which the flow channel C branches into a recovery flow channel and a waste liquid flow channel on the downstream side, and specific biological particles are collected in the recovery flow channel.

Note that the present technology can adopt the following configurations.
[1] An information processing apparatus including:
   a receiving section that acquires at least one of information about a sample including microparticles in a microparticle analyzing apparatus or information about a measurement condition of the sample;
   a fetching section that fetches particle information about one particle from a waveform of signal intensity with respect to measurement time from a microparticle included in the sample, the waveform being measured by the microparticle analyzing apparatus; and
   an input section to which mode selection information for selecting a mode of the fetching section is input, in which
   the fetching section includes a mode selecting section that selects a normal fetch mode and at least one center-time-fixed fetch mode, and
   the center-time-fixed fetch mode is selectable on the basis of the mode selection information input to the input section.
[2] The information processing apparatus according to [1], in which
   in the center-time-fixed fetch mode, using a preset prefetch time, a preset postfetch time, a preset threshold, and a preset center time,
   a point at which the signal intensity exceeds the threshold is identified as a fetch start reference point,
   whichever ends earlier of a center time end point and a threshold cross-down point is identified as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point, and
   a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.
[3] The information processing apparatus according to [2], in which
   the fetching section includes a center time determining section that adjusts to set the center time such that a ratio of a certain number of the pieces of particle information to a total number of the pieces of particle information fetched becomes equal to or lower than 10%, the certain number being a number of the pieces of particle information fetched by identifying the center time end point as the fetch end reference point.
[4] The information processing apparatus according to any one of [1] to [3], in which
   in the normal fetch mode,
   a point at which the signal intensity exceeds the threshold is identified as a fetch start reference point,
   a threshold cross-down point at which the signal intensity becomes equal to or lower than the threshold is identified as a fetch end reference point, and
   a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.
[5] The information processing apparatus according to any one of [1] to [4], in which
   the input of the mode selection information is performed by one of manual input, reading of the measurement target, and reading of the measurement information.
[6] The information processing apparatus according to any one of [1] to [5], in which
   the fetching section further includes a calculator that calculates a particle size of a particle from the particle information, and
   when an average particle size of the particles is equal to or greater than 10 µm, the mode selecting section selects the center-time-fixed fetch mode.
[7] The information processing apparatus according to any one of [1] to [6], further including
   an analyzing section that analyzes a waveform of the fetched particle information.
[8] A microparticle analyzing apparatus including
   the information processing apparatus according to any one of [1] to [7].
[9] An information processing system including:
   a measurement system that measures a waveform of signal intensity with respect to measurement time treating, as a measurement target, a liquid in which microparticles are present;
   a reception system that acquires at least one of information about the measurement target from the measurement system or information about a measurement condition of the measurement target;
   a fetching system that fetches particle information about one particle from the waveform of the signal intensity with respect to the measurement time from a microparticle included in the sample, the waveform being measured by a microparticle analyzing apparatus; and
   an input system to which mode selection information for selecting a mode of the fetching system is input, in which
   the fetching system includes a mode selecting section that selects a normal fetch mode and at least one center-time-fixed fetch mode, and
   the center-time-fixed fetch mode is selectable on the basis of the mode selection information input to the input system.
[10] The information processing system according to [9], in which
   in the center-time-fixed fetch mode, using a preset prefetch time, a preset postfetch time, a preset threshold, and a preset center time,
   a point at which the signal intensity exceeds the threshold is identified as a fetch start reference point,
   whichever ends earlier of a center time end point and a threshold cross-down point is identified as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point, and
   a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.
[11] An information processing apparatus including:
   a fetching section that fetches particle information about particles from a waveform of signal intensity with respect to measurement time, the waveform being included in measurement information measured treating, as a measurement target, a liquid in which the particles are present, in which
   the fetching section has a center-time-fixed fetch mode, and
   in the center-time-fixed fetch mode, using a preset prefetch time, a preset postfetch time, a preset threshold, and a preset center time,
      a point at which the signal intensity exceeds the threshold is identified as a fetch start reference point,
      whichever ends earlier of a center time end point and a threshold cross-down point is identified as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point, and
      a waveform from a fetch start point to a fetch end point is fetched from the waveform of the signal intensity with respect to the measurement time as particle information about one particle, the fetch start point being the prefetch time before the fetch start reference point, the fetch end point being the postfetch time after the fetch end reference point.
[12] The information processing apparatus according to [11], in which
   the fetching section includes a center time determining section that adjusts to set the center time such that a ratio of a certain number of the pieces of particle information to a total number of the pieces of particle information fetched becomes equal to or lower than 10%, the certain number being a number of the pieces of particle information fetched by identifying the center time end point as the fetch end reference point.
[13] The information processing apparatus according to [11] or [12], in which
   the fetching section includes a mode selecting section that selects the center-time-fixed fetch mode and a normal fetch mode, and
   in the normal fetch mode,
      a point at which the signal intensity exceeds the threshold is identified as a fetch start reference point,
      a threshold cross-down point at which the signal intensity becomes equal to or lower than the threshold is identified as a fetch end reference point, and
      a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.
[14] The information processing apparatus according to [13], further including
   an input section to which mode selection information for selecting a mode is input, in which
   the center-time-fixed fetch mode and the normal fetch mode are selected on the basis of the mode selection information.
[15] The information processing apparatus according to [14], in which
   the input of the mode selection information is performed by one of manual input, reading of the measurement target, and reading of the measurement information.
[16] The information processing apparatus according to any one of [13] to [15], in which
   the fetching section further includes a calculator that calculates a particle size of a particle from the particle information, and
   when an average particle size of the particles is equal to or greater than 10 µm, the mode selecting section selects the center-time-fixed fetch mode.
[17] The information processing apparatus according to any one of [11] to [16], further including
   an analyzing section that analyzes a waveform of the fetched particle information.
[18] The information processing apparatus according to any one of [11] to [17], in which
   the waveform is measured by a microparticle analyzing apparatus.
[19] The information processing apparatus according to any one of [11] to [18], further including
   a receiving section that receives the waveform.
[20] A microparticle analyzing apparatus including
   the information processing apparatus according to any one of [11] to [19].
[21] A particle information fetch method of fetching particle information about particles from a waveform of signal intensity with respect to measurement time, the waveform being measured treating, as a measurement target, a liquid in which the particles are present, the particle information fetch method including:
   setting a prefetch time, a postfetch time, a threshold, and a center time;
   identifying, in the waveform and as a fetch start reference point, a point at which the signal intensity exceeds the threshold;
   identifying whichever ends earlier of a center time end point and a threshold cross-down point as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point; and
   fetching, from the waveform of the signal intensity with respect to the measurement time, a waveform from a fetch start point to a fetch end point as particle information about one particle, the fetch start point being the prefetch time before the fetch start reference point, the fetch end point being the postfetch time after the fetch end reference point.
[22] The particle information fetch method according to [21], in which
   the setting of the center time is performed by adjusting the center time such that a ratio of a certain number of the pieces of particle information to a total number of the pieces of particle information fetched becomes equal to or lower than 10%, the certain number being a number of the pieces of particle information fetched by identifying the center time end point as the fetch end reference point.
[23] The particle information fetch method according to [21] or [22], in which
   a particle size of the particles is equal to or greater than 10 µm.
[24] The particle information fetch method according to any one of [21] to [23], in which
   the particles include carriers.
[25] The particle information fetch method according to [24], in which
   the carriers are supports.
[26] The particle information fetch method according to any one of [21] to [25], in which
   a number of the particles in 100 µl of the liquid is equal to or smaller than 10,000,000.
[27] A particle distinguishing method of distinguishing between particles on the basis of a shape of a waveform of particle information fetched by executing the particle information fetch method according to any one of [21] to [26].
[28] A method of analyzing the measurement target, the method including
   analyzing particle information fetched by executing the particle information fetch method according to any one of [21] to [26].
[29] An information processing system including:
   a measurement system that measures a waveform of signal intensity with respect to measurement time treating, as a measurement target, a liquid in which particles are present;
   a reception system that receives the waveform from the measurement system; and
   a fetching system that fetches particle information about the particles from the waveform, in which
   using a preset prefetch time, a preset postfetch time, a preset threshold, and a preset center time, the fetching system
      identifies a point at which the signal intensity exceeds the threshold as a fetch start reference point,
      identifies whichever ends earlier of a center time end point and a threshold cross-down point as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point, and
      fetches, from the waveform of the signal intensity with respect to the measurement time, a waveform from a fetch start point to a fetch end point as particle information about one particle, the fetch start point being the prefetch time before the fetch start reference point, the fetch end point being the postfetch time after the fetch end reference point.
[29] A particle information fetch program used to fetch particle information about particles from a waveform of signal intensity with respect to measurement time, the waveform being measured treating, as a measurement target, a liquid in which the particles are present, the particle information fetch program causing a process to be performed, the process including:
   setting a prefetch time, a postfetch time, a threshold, and a center time;
   identifying, in the waveform and as a fetch start reference point, a point at which the signal intensity exceeds the threshold;
   identifying whichever ends earlier of a center time end point and a threshold cross-down point as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point; and
   fetching, from the waveform of the signal intensity with respect to the measurement time, a waveform from a fetch start point to a fetch end point as particle information about one particle, the fetch start point being the prefetch time before the fetch start reference point, the fetch end point being the postfetch time after the fetch end reference point.

### Reference Signs List

- 100: support body
- 102, 102-1, 102-2, 102-3, 102-4: opening
- 103, 103-1, 103-2, 103-3: cavity
- 104: inner surface of cavity
- 105: capturing section
- 60: container
- 80: particle (bio-particle)

## Claims

1. An information processing apparatus comprising:
a receiving section that acquires at least one of information about a sample including microparticles in a microparticle analyzing apparatus or information about a measurement condition of the sample;
a fetching section that fetches particle information about one particle from a waveform of signal intensity with respect to measurement time from a microparticle included in the sample, the waveform being measured by the microparticle analyzing apparatus; and
an input section to which mode selection information for selecting a mode of the fetching section is input, wherein
the fetching section includes a mode selecting section that selects a normal fetch mode and at least one center-time-fixed fetch mode, and
the center-time-fixed fetch mode is selectable on a basis of the mode selection information input to the input section.

2. The information processing apparatus according to claim 1, wherein
in the center-time-fixed fetch mode, using a preset prefetch time, a preset postfetch time, a preset threshold, and a preset center time,
a point at which the signal intensity exceeds the threshold is identified as a fetch start reference point,
whichever ends earlier of a center time end point and a threshold cross-down point is identified as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point, and
a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.

3. The information processing apparatus according to claim 2, wherein
the fetching section includes a center time determining section that adjusts to set the center time such that a ratio of a certain number of the pieces of particle information to a total number of the pieces of particle information fetched becomes equal to or lower than 10%, the certain number being a number of the pieces of particle information fetched by identifying the center time end point as the fetch end reference point.

4. The information processing apparatus according to claim 1, wherein
in the normal fetch mode,
a point at which the signal intensity exceeds the threshold is identified as a fetch start reference point,
a threshold cross-down point at which the signal intensity becomes equal to or lower than the threshold is identified as a fetch end reference point, and
a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.

5. The information processing apparatus according to claim 1, wherein
the input of the mode selection information is performed by one of manual input, reading of the measurement target, and reading of the measurement information.

6. The information processing apparatus according to claim 1, wherein
the fetching section further includes a calculator that calculates a particle size of a particle from the particle information, and
when an average particle size of the particles is equal to or greater than 10 µm, the mode selecting section selects the center-time-fixed fetch mode.

7. The information processing apparatus according to claim 1, further comprising
an analyzing section that analyzes a waveform of the fetched particle information.

8. A microparticle analyzing apparatus comprising
the information processing apparatus according to claim 1.

9. A particle information fetch method of fetching particle information about particles from a waveform of signal intensity with respect to measurement time, the waveform being measured treating, as a measurement target, a liquid in which the particles are present, the particle information fetch method comprising:
setting a prefetch time, a postfetch time, a threshold, and a center time;
identifying, in the waveform and as a fetch start reference point, a point at which the signal intensity exceeds the threshold;
identifying whichever ends earlier of a center time end point and a threshold cross-down point as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point; and
fetching, from the waveform of the signal intensity with respect to the measurement time, a waveform from a fetch start point to a fetch end point as particle information about one particle, the fetch start point being the prefetch time before the fetch start reference point, the fetch end point being the postfetch time after the fetch end reference point.

10. The particle information fetch method according to claim 9, wherein
the setting of the center time is performed by adjusting the center time such that a ratio of a certain number of the pieces of particle information to a total number of the pieces of particle information fetched becomes equal to or lower than 10%, the certain number being a number of the pieces of particle information fetched by identifying the center time end point as the fetch end reference point.

11. The particle information fetch method according to claim 9, wherein
a particle size of the particles is equal to or greater than 10 µm.

12. The particle information fetch method according to claim 9, wherein
the particles include carriers.

13. The particle information fetch method according to claim 11, wherein
a number of the particles in 100 µl of the liquid is equal to or smaller than 10,000,000.

14. A particle distinguishing method of distinguishing between particles on a basis of a shape of a waveform of particle information fetched by executing the particle information fetch method according to claim 9.

15. A method of analyzing the measurement target, the method comprising
analyzing particle information fetched by executing the particle information fetch method according to claim 9.

16. An information processing system comprising:
a measurement system that measures a waveform of signal intensity with respect to measurement time treating, as a measurement target, a liquid in which microparticles are present;
a reception system that acquires at least one of information about the measurement target from the measurement system or information about a measurement condition of the measurement target;
a fetching system that fetches particle information about one particle from the waveform of the signal intensity with respect to the measurement time from a microparticle included in the sample, the waveform being measured by a microparticle analyzing apparatus; and
an input system to which mode selection information for selecting a mode of the fetching system is input, wherein
the fetching system includes a mode selecting section that selects a normal fetch mode and at least one center-time-fixed fetch mode, and
the center-time-fixed fetch mode is selectable on a basis of the mode selection information input to the input system.

17. The information processing system according to claim 16, wherein
in the center-time-fixed fetch mode, using a preset prefetch time, a preset postfetch time, a preset threshold, and a preset center time,
a point at which the signal intensity exceeds the threshold is identified as a fetch start reference point,
whichever ends earlier of a center time end point and a threshold cross-down point is identified as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point, and
a waveform from a fetch start point to a fetch end point is fetched from the waveform of the signal intensity with respect to the measurement time as the particle information about one particle, the fetch start point being the prefetch time before the fetch start reference point, the fetch end point being the postfetch time after the fetch end reference point.

18. A particle information fetch program used to fetch particle information about particles from a waveform of signal intensity with respect to measurement time, the waveform being measured treating, as a measurement target, a liquid in which the particles are present, the particle information fetch program causing a process to be performed, the process comprising:
setting a prefetch time, a postfetch time, a threshold, and a center time;
identifying, in the waveform and as a fetch start reference point, a point at which the signal intensity exceeds the threshold;
identifying whichever ends earlier of a center time end point and a threshold cross-down point as a fetch end reference point, the center time end point being a point at which the center time whose start point is the fetch start reference point ends, the threshold cross-down point being a point at which the signal intensity last becomes equal to or lower than the threshold within the center time whose start point is the fetch start reference point; and
fetching, from the waveform of the signal intensity with respect to the measurement time, a waveform from a fetch start point to a fetch end point as particle information about one particle, the fetch start point being the prefetch time before the fetch start reference point, the fetch end point being the postfetch time after the fetch end reference point.
